# EUROPEAN PATENT APPLICATION

(11) **EP 4 001 969 A1**
(43) Date of publication of application: **25.05.2022**
(21) Application number: 21207411.6
(22) Date of filing: 10.11.2021
(51) Int. Cl.: G01S 19/35, A01B 69/04, B60R 11/02

(54) **WORK VEHICLE**

(30) Priority: 12.11.2020 JP 2020188730
(71) Applicant: Iseki & Co., Ltd., Matsuyama-shi, Ehime 799-2692 (JP)
(72) Inventor: TAKEI, Yu, Iyo-gun, 791-2193 (JP)
(74) Representative: TBK

(57) **Abstract**

To provide a work vehicle facilitating antenna unit handling with a simple structure while retaining a satisfactory reception accuracy. The above problem is solved by providing a work vehicle A with an engine bonnet B arranged in the front portion of a traveling vehicle body a1. The work vehicle includes: a weight bracket al5 at the front end; and an antenna unit attachment device X attaching an antenna unit U to the traveling vehicle body a1. The antenna unit attachment device X has a fixing portion x1 for fixing to the weight bracket a15, a pair of side rod portions x2 and x2 erected on the right and left sides of the fixing portion x1, and an erection portion x3 laid across the engine bonnet B. The side rod portions x2 and x2 are arranged so as to be separated from the engine bonnet B. The erection portion x3 is configured to support the antenna unit U at a position lower than a steering handle a8 and in the air above the front portion of the traveling vehicle body a1.

## Description

### FIELD OF THE INVENTION

The present invention relates to a work vehicle provided with an antenna unit.

### DESCRIPTION OF THE RELATED ART

In the related art, the work vehicle described in JP-A-2019-108004 is known as a work vehicle provided with an antenna unit receiving positioning satellite information transmitted from a GPS satellite or the like. JP-A-2019-108004 discloses a configuration in which an antenna unit is placed and fixed on the upper surface of an engine bonnet in the front portion of a work vehicle (see Fig. 18).

In addition, JP-A-2019-108004 discloses a configuration in which an antenna unit is attached to a rollover protective structure erected in the front or rear portion of a work vehicle (see Figs. 36 and 38).

However, according to the configuration in which the antenna unit is placed and fixed on the upper surface of the engine bonnet, the vibration of the engine bonnet may propagate to the antenna unit and a decline in reception accuracy may arise. Although the decline in reception accuracy attributable to the vibration can be avoided using the configuration in which the antenna unit is attached to the rollover protective structure, the structure around the antenna unit in this configuration increases in scale due to the structure of the rollover protective structure and it becomes cumbersome for a worker to handle the antenna unit.

### SUMMARY OF THE INVENTION

In this regard, an object of the invention is to solve such a problem by providing a work vehicle facilitating antenna unit handling with a simple structure while retaining a satisfactory reception accuracy.

In order to achieve the above object, a first invention provides a work vehicle with an engine bonnet arranged in a front portion of a traveling vehicle body and covering a motor unit, the work vehicle including:
a weight bracket for weight attachment arranged at a front end of the traveling vehicle body; and
an antenna unit attachment device attaching an antenna unit measuring a position and orientation of the traveling vehicle body to the traveling vehicle body, in which
the antenna unit attachment device has
a fixing portion where the antenna unit attachment device is fixed to the weight bracket,
a pair of side rod portions respectively erected on right and left sides of the fixing portion, and
an erection portion attached to an upper end of the side rod portion and laid across the engine bonnet,
the side rod portion is arranged so as to be separated from the engine bonnet, and
the erection portion is configured to support the antenna unit at a position lower than a steering handle provided behind the engine bonnet and in the air above the front portion of the traveling vehicle body.

According to the first invention described above, a sensor unit is fixed to the weight bracket at the front end of an engine frame by the antenna unit attachment device and is supported in the air above the front portion of the traveling vehicle by the right and left side rod portions separated from the engine bonnet and the erection portion laid between the right and left side rod portions. Propagation of the vibration of the engine bonnet is prevented by this configuration, and a satisfactory reception accuracy can be retained by the simple structure. Further, since the antenna unit is supported and fixed in the front portion of the traveling vehicle body, the antenna unit is capable of satisfactorily measuring the position and orientation of the work vehicle even when the work vehicle turns. In addition, the antenna unit does not obstruct a driver's forward view since the antenna unit is supported at the position lower than the steering handle provided behind the engine bonnet and in the air above the front portion of the traveling vehicle body.

In addition to the configuration of the first invention, in a second invention, the pair of side rod portions have a configuration allowing separation of one end side of the erection portion and are provided with
a pivot mechanism allowing the one end side of the erection portion to pivot around the other end side, and
a locking mechanism allowing the one end side of the erection portion to be locked and fixed.

According to the second invention described above, the effect of the first invention can be achieved and, in addition, in opening and closing the engine bonnet using the pivot and locking mechanisms, the erection portion is released from the fixed state, the erection portion is pivoted upward and given an open posture, and thus interference can be avoided during the engine bonnet opening and closing.

In addition to the configuration of the first or second invention, in a third invention, an indicator monitor provided with indicators allowing a driver to check a reception status of the antenna unit is provided between the antenna unit and the steering handle and an upper end of the indicator monitor is arranged below an upper end of the steering handle.

According to the third invention described above, the effect of the first or second invention can be achieved and, in addition, a driver's forward view is not obstructed by the indicator monitor since the upper end of the indicator monitor is arranged below the upper end of the steering handle.

According to the invention, a work vehicle facilitating antenna unit handling with a simple structure while retaining a satisfactory reception accuracy can be provided.

### BRIEF DESCRIPTION OF THE DRAWINGS

Fig. 1 is a left side view of a work vehicle according to an embodiment of the invention;
Fig. 2 is a perspective view of a main part around an antenna unit attachment device of the work vehicle of Fig. 1;
Fig. 3 is a left side view of the main part of the same;
Fig. 4 is a plan view of the main part of the same;
Fig. 5 is a perspective view of the antenna unit attachment device of the work vehicle of Fig. 1;
Fig. 6 is an enlarged view of a main part of the same;
Fig. 7 is a perspective view of the main part around the antenna unit attachment device that is in an open posture;
Fig. 8 is a perspective view of a main part around an indicator monitor of the work vehicle of Fig. 1; and
Fig. 9 is a perspective view of the main part around the indicator monitor that is equipped with a sunshade.

### DETAILED DESCRIPTION OF THE INVENTION

Hereinafter, a preferred embodiment of the invention will be described with reference to the accompanying drawings. Unless otherwise specified, the forward direction of the work vehicle in the following description is the front, the direction opposite thereto is the rear, and the right and the left are sides in facing forward.

### <1. Overall Configuration of Work Vehicle>

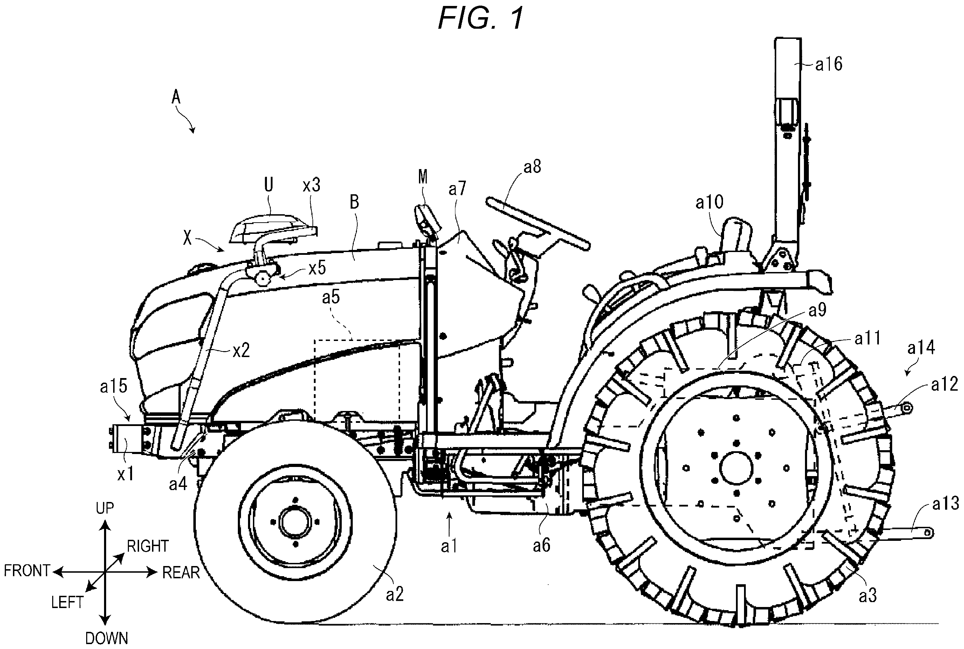

Fig. 1 is a left side view of a work vehicle A according to the embodiment of the invention.

The work vehicle A has the configuration of a so-called tractor including a traveling vehicle body a1 provided with traveling means and work machine connecting means for connecting a work machine performing farm work to the rear portion of the traveling vehicle body a1.

As for the traveling vehicle body a1, front and rear wheels a2 and a3 as the traveling means are supported in the front and rear portions of the vehicle body, respectively. An engine a5 as a motor unit is stored in an engine bonnet B on an engine frame a4. Further, a clutch housing is fixed to the rear surface of the engine a5 and a transmission case a6 extends from the rear surface of the clutch housing. These mechanisms enable four-wheel drive traveling. In addition, a weight bracket a15 for weight attachment is arranged at the front end of the engine frame a4.

A dashboard a7 is continuously provided in the rear portion of the engine bonnet B. A steering handle a8 is disposed on the dashboard a7. A hydraulic cylinder case a9 is placed on the transmission case a6. A driver's seat a10 is disposed above the hydraulic cylinder case a9. Operation members such as main shift, position, and draft levers are arranged in front of the driver's seat a10.

A work machine mounting device a14 as the work machine connecting means is arranged in the rear portion of the traveling vehicle body a1. The work machine mounting device a14 includes, for example, lift arms a11 and a11, a top link a12, and lower links a13 and a13 protruding rearward beyond the side portion of the hydraulic cylinder case a9, and the work machine mounted on the work machine mounting device a14 can be lifted and lowered. In addition, a rollover protective structure a16 for rollover prevention is erected at the rear end of the traveling vehicle body a1.

### <2. Antenna Unit Attachment Structure>

Next, an attachment structure for an antenna unit U will be described.

It should be noted that the antenna unit U is a known positioning device receiving radio waves transmitted from a GPS satellite and measuring the position and orientation of the traveling vehicle body a1.

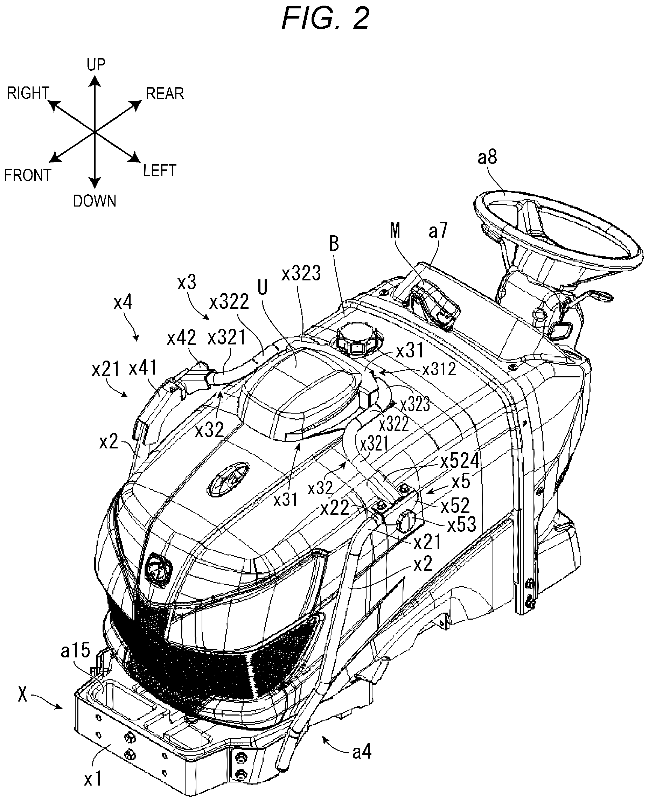

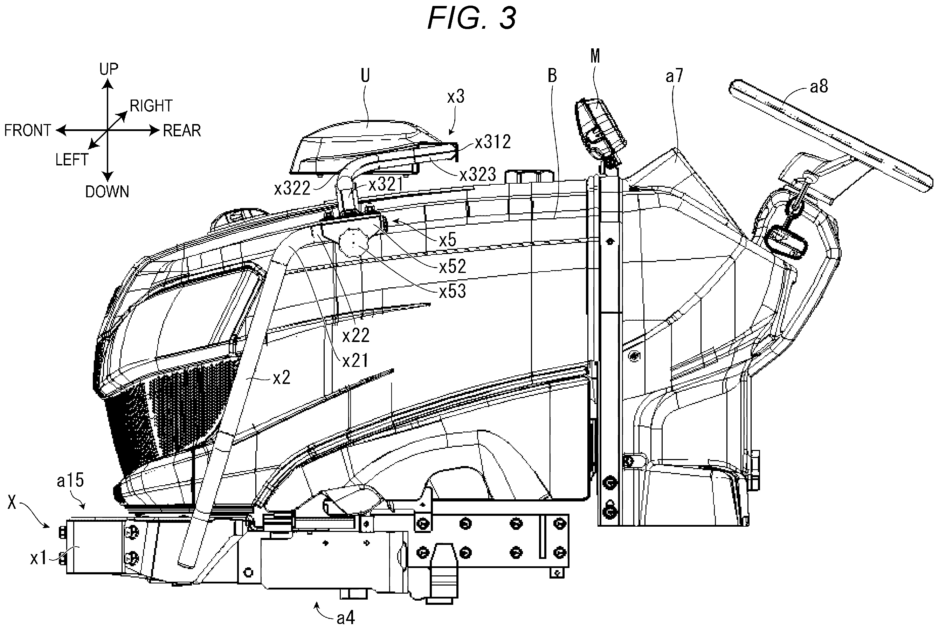

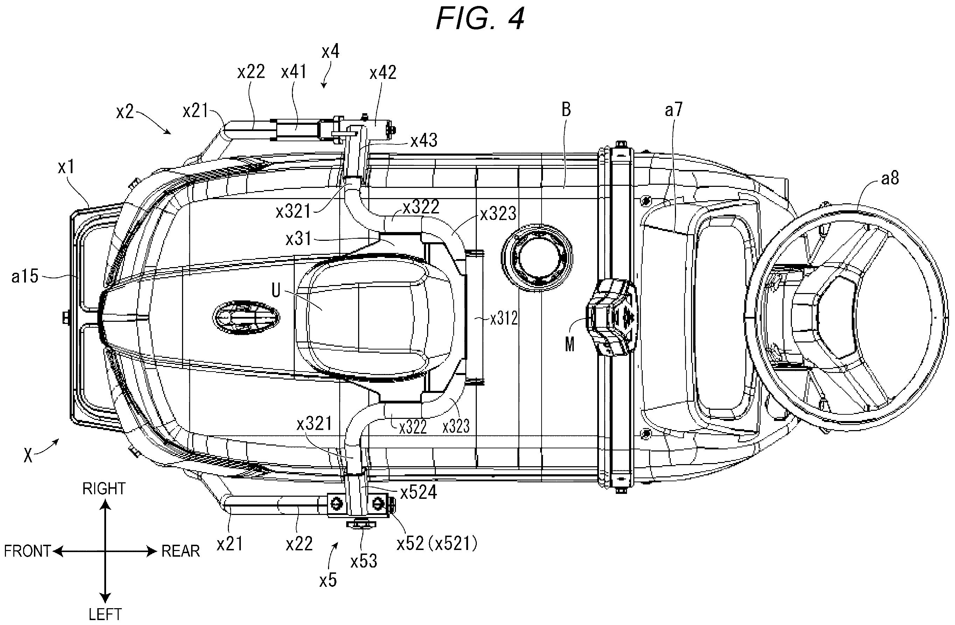

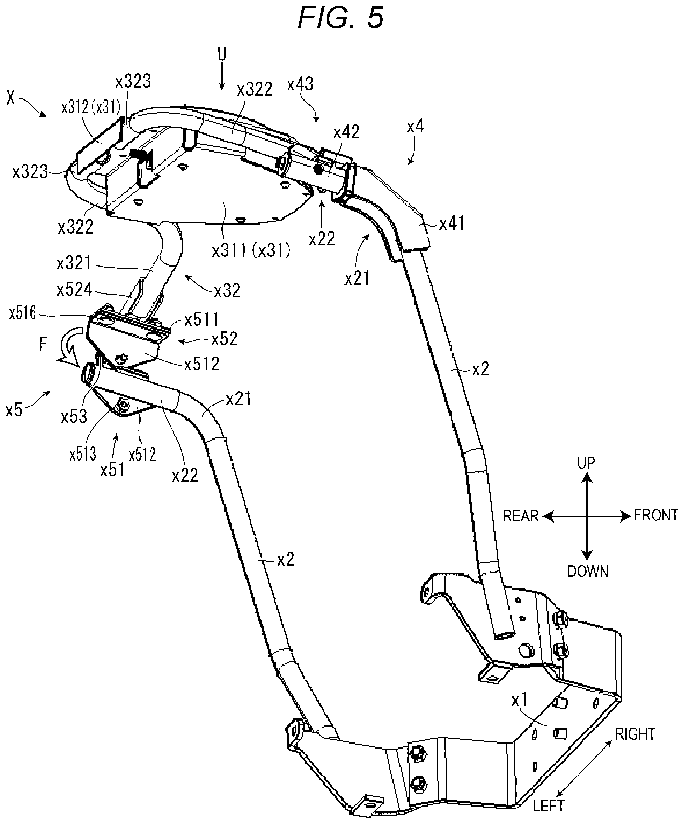

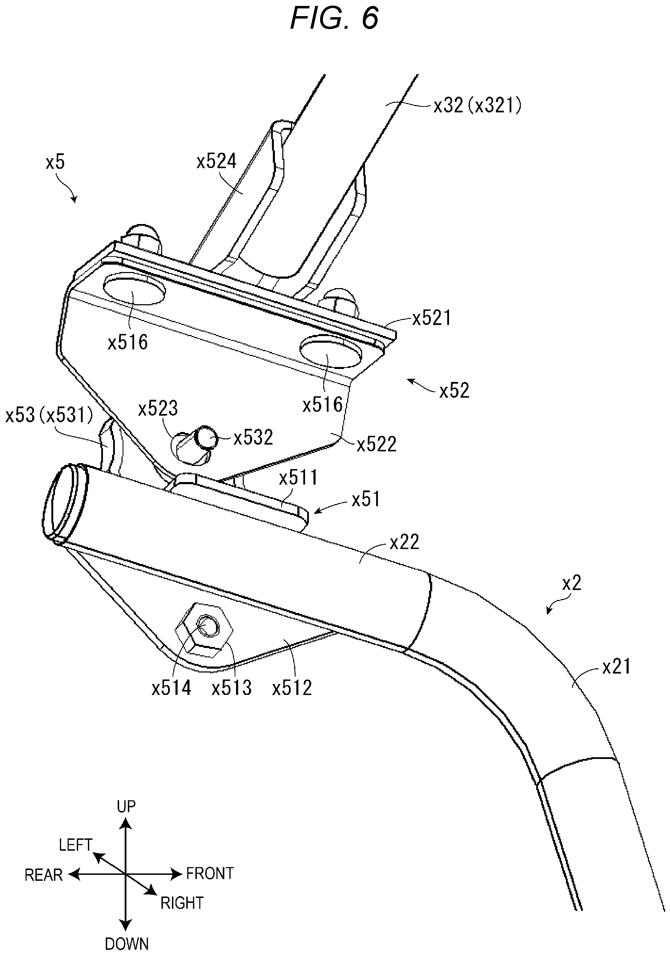

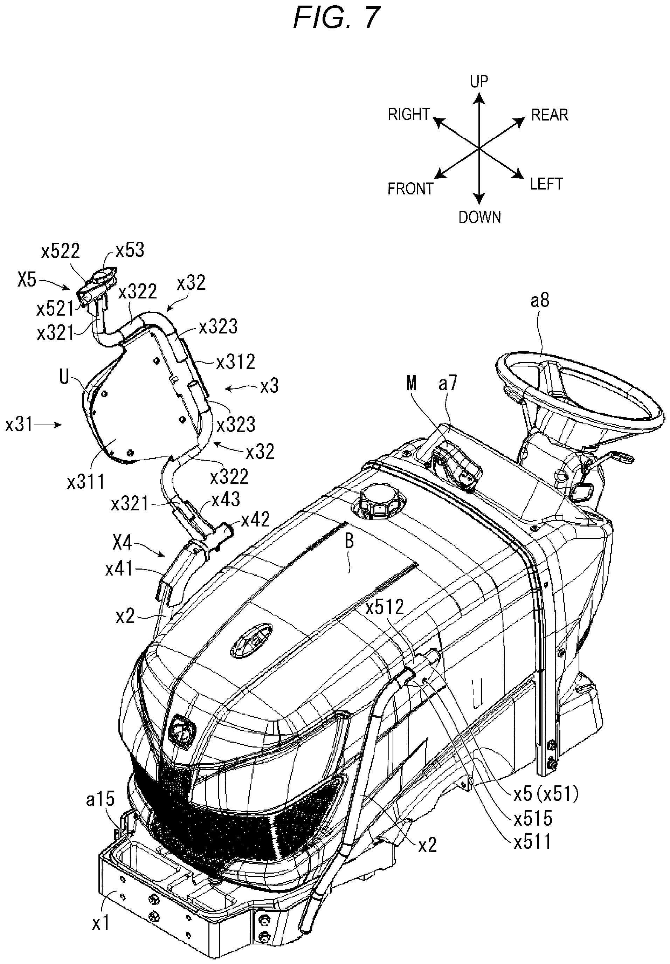

Fig. 2 is a perspective view of a main part around an antenna unit attachment device X of the work vehicle of Fig. 1. Fig. 3 is a left side view of the main part. Fig. 4 is a plan view of the main part. Fig. 5 is a perspective view of the antenna unit attachment device of the work vehicle of Fig. 1. Fig. 6 is an enlarged view of a main part. Fig. 7 is a perspective view of the main part around the antenna unit attachment device of Fig. 2 that is in an open posture.

The work vehicle A is provided with the antenna unit attachment device X for attaching the antenna unit U to the traveling vehicle body a1 as illustrated in Figs. 2 to 4. The antenna unit attachment device X includes a fixing portion x1 where the antenna unit attachment device X is fixed to the traveling vehicle body a1, a pair of side rod portions x2 and x2 respectively erected on the right and left sides of the fixing portion x1, and an erection portion x3 laid at the upper ends of the side rod portions x2 and x2 across the engine bonnet B.

The fixing portion x1 is mounted by bolt-fastening an attachment bracket to the front end of the weight bracket a15. The attachment bracket is a rigid plate-shaped member bent so as to match the shape of the weight bracket a15 arranged at the front end of the engine frame a4. Here, the weight bracket a15 has high rigidity for weight attachment and is capable of suppressing the impact of vibration of the engine a5 or the like.

Each of the right and left side rod portions x2 and x2 is formed of a rod-shaped rigid pipe material and has a lower end bolt-fastened and fixed to the side portion of the fixing portion x1. The shape from the lower end to the upper end is inclined so as to rise rearward. The side rod portions x2 and x2 include bent portions x21 and x21 horizontally bent in front of the upper end and horizontal rod portions x22 and x22 horizontally extending rearward from the bent portions. The bent portion x21 and the horizontal rod portion x22 are formed at height positions slightly below the upper end of the engine bonnet B. It should be noted that the side rod portions x2 and x2 are arranged so as to be separated from the side surface of the engine bonnet B. As a result, the vibration of the engine bonnet B is not propagated.

A pivot mechanism x4 allowing one end side (left side) of the erection portion x3 to pivot around the other end side (right side) is provided in the upper portion of the side rod portion x2 on the right side. A locking mechanism x5 allowing one end side (left side) of the erection portion x3 to be locked and fixed is provided in the upper portion of the side rod portion x2 on the left side.

The pivot mechanism x4 includes a fixed housing plate x41 mounted on and fixed to the side rod portion x2 on the right side and a rotating tube x42 rotatably attaching the erection portion x3 to the fixed housing plate x41.

The fixed housing plate x41 is a rigid plate member having a substantially U-shaped cross section and an open lower surface and is fitted so as to cover the bent portion x21 of the side rod portion x2 on the right side.

The horizontal rod portion x22 of the side rod portion x2 on the right side is inserted into the rotating tube x42. The front end of the rotating tube x42 is rotatably connected to the rear end of the fixed housing plate x41. Formed on the peripheral surface of the rotating tube x42 is a right end sandwiching and fixing frame x43 having a U-shaped cross section and sandwiching and fixing the right end of the erection portion x3. With the right end sandwiching and fixing frame x43 sandwiching and fixing the right end of the erection portion x3, the erection portion x3 is pivotable around the horizontal rod portion x22 of the side rod portion x2 on the right side as an axis.

As illustrated in Fig. 5, the locking mechanism x5 includes a locking plate x51 attached to the horizontal rod portion x22 of the side rod portion x2 on the left side, a locked plate x52 sandwiching and fixing the left end of the erection portion x3, and a knob bolt x53 capable of fixing the locked plate x52 locked to the locking plate x51. It should be noted that Fig. 5 illustrates a state where the locking plate x51 and the locked plate x52 are yet to be locked and the locked plate x52 is locked to the locking plate x51 when the locked plate x52 is pivoted in the arrow F direction.

The locking plate x51 has an inverted L shape when viewed from the front, in which a plate-shaped member is bent by approximately 90 degrees in the middle portion thereof. A horizontal plate portion x511 and a vertical plate portion x512 are formed with the internal angle side of the locking plate x51 supported by and fixed to the horizontal rod portion x22 of the side rod portion x2 on the left side. A nut portion x513 is arranged near the lower end of the vertical plate portion x512 (see Figs. 5 and 6).

A through hole x514 having a thread is provided in the nut portion x513. The through hole x514 is formed so as to be continuous with a round hole x515 (see Fig. 7) provided in the vertical plate portion x512. A screw portion x532 can be screwed into and fixed to the through hole x514 by operating a handle x531 of the knob bolt x53.

As in the case of the locking plate x51, a horizontal plate portion x521 and a vertical plate portion x522 of the locked plate x52 are formed with a plate-shaped member bent by approximately 90 degrees in the middle portion thereof. As a result, the locked plate x52 has an overlappable shape so as to cover the locking plate x51 from above. An insertion hole x523 through which the screw portion x532 of the knob bolt x53 is inserted is provided at the lower end of the vertical plate portion x522 of the locked plate x52 (see Fig. 6).

In addition, a left end sandwiching and fixing frame x524 having a U-shaped cross section and sandwiching and fixing the left end of the erection portion x3 is formed in the horizontal plate portion x521 of the locked plate x52. The left end sandwiching and fixing frame x524 sandwiches and fixes the left end of the erection portion x3. As a result, the locked plate x52 is capable of pivoting together with the erection portion x3.

As for the locking mechanism x5 configured as described above, the locked plate x52 is fixed to the locking plate x51 by fastening the knob bolt x53 to the nut portion x513 with the locked plate x52 overlapping the locking plate x51. As a result, the erection portion x3 can be fixed.

Meanwhile, in opening and closing the engine bonnet B, the knob bolt x53 is removed from the nut portion x513, the locked plate x52 is released from the fixed state, and the erection portion x3 is pivoted upward and given an open posture. As a result, interference can be avoided in opening and closing the engine bonnet B.

In addition, as illustrated in Fig. 6, the horizontal plate portion x522 of the locked plate x52 is provided so as to be slightly smaller in front-rear width than the horizontal plate portion x522 of the locking plate x51. Further, protrusion-shaped front and rear flat buttons x516 and x516 corresponding to the front-rear width of the horizontal plate portion x521 of the locked plate x52 are arranged on the lower surface of the horizontal plate portion x512 of the locking plate x51. As a result, the locked plate x52 and the locking plate x51 can be aligned with ease. As a result, the knob bolt x53 can be fastened with ease, and thus workability is improved when the erection portion x3 is fixed.

The erection portion x3 includes a pedestal plate x31 where the sensor unit U is placed and fixed and a pair of curved cross-linked pipes x32 and x32 attached to the right and left of the pedestal plate x31.

Each of the right and left curved cross-linked pipes x32 and x32 has a front end portion x321 extending in the right-left direction on the front end side, a rear end pipe portion x323 extending in the right-left direction on the rear end side, and an intermediate pipe portion x322 extending in the front-rear direction between the front end pipe portion x321 and the rear end pipe portion x323. The curved cross-linked pipe x32 is bent in a substantially S shape.

The pedestal plate x31 includes a flat plate-shaped seat plate portion x311 where the sensor unit U is placed and fixed and a hook-shaped hook portion x312 bent at the rear end of the seat plate portion x311. The hook portion x312 is hooked and fixed to the right and left rear end pipe portions x323 and x323. In addition, a cushioning material (not illustrated) absorbing vibration is arranged between the sensor unit U and the seat plate portion x311 and the vibration of the sensor unit U is suppressed.

The front end pipe portion x321 and the intermediate pipe portion x322 have a gentle rise toward the rear end and are configured such that the pedestal plate x31 is supported in the air above the engine bonnet B. As a result, propagation of the vibration of the engine bonnet B to the sensor unit U is prevented.

In this manner, the sensor unit U is fixed to the weight bracket a15 at the front end of the engine frame a4 by the antenna unit attachment device X, provided with the right and left side rod portions x2 and x2 separated from the engine bonnet B, and supported in the air above the front portion of the traveling vehicle body a1 by the erection portion x3 laid between the right and left side rod portions x2 and x2. A satisfactory reception accuracy can be retained by this configuration.

In addition, the right and left side rod portions x2 and x2 and the erection portion x3 have a shape along the outer shape of the engine bonnet B and are formed apart from the engine bonnet. Accordingly, the structure around the antenna unit U is simple and compact and the antenna unit U is easy to handle. In addition, the antenna unit attachment device X supports and fixes the antenna unit U in the front portion of the traveling vehicle body a1, and thus the antenna unit U is capable of satisfactorily measuring the position and orientation of the work vehicle A even when the work vehicle A turns.

### <3. Configuration of Indicator Monitor>

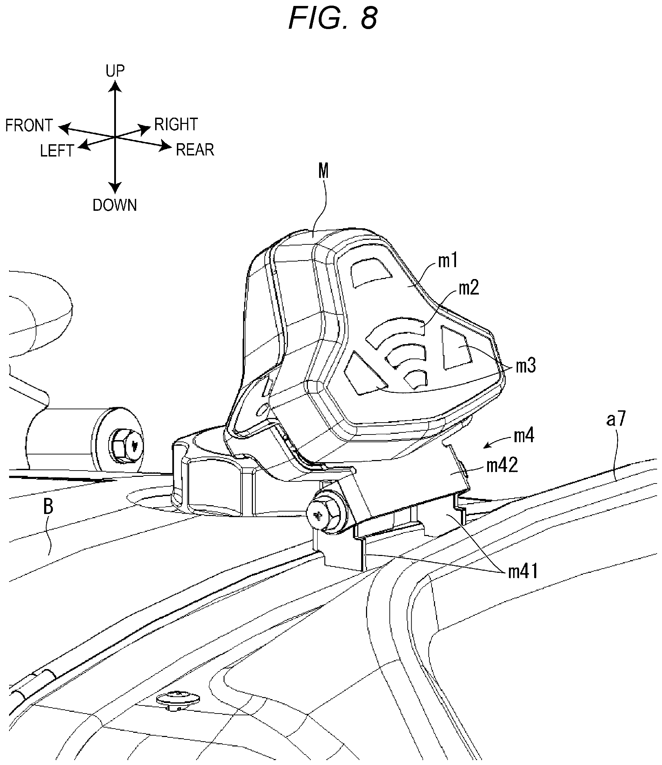

Fig. 8 is a perspective view of a main part around an indicator monitor M of the work vehicle of Fig. 1.

The indicator monitor M is provided between the antenna unit U and the steering handle a8 and is provided with an indicator with which a driver can check the reception status of the antenna unit U. The upper end of the indicator monitor M is arranged below the upper end of the steering handle a8, and thus the driver's forward view is not obstructed.

A display unit m1 of the indicator monitor M is provided with a vertical arrangement indicator m2 and right-left arrangement indicators m3 and m3 as indicators. It is possible to know the status of GPS radio wave reception depending on whether the vertical arrangement indicator m2 is on or off.

It is possible to know errors in the right and left traveling directions with respect to the straight traveling of the work vehicle A depending on whether the right-left arrangement indicators m3 and m3 are on or off.

The indicator monitor M includes a support mechanism portion m4 pivotably supporting the indicator monitor M. As for the support mechanism portion m4, a pivot stay m42 pivotably and axially supported by an axial support portion m41 provided on the dashboard a7 is pivotably bolt-fastened and the display unit m1 is attached to the pivot stay m42. With such a configuration, the attachment angle of the display unit m1 can be changed to any angle and can be adjusted to an angle facilitating visual recognition by a driver.

In addition, the upper end of the indicator monitor M is provided at a position lower than the upper ends of the antenna unit U and the steering handle a8. As a result, when a driver looks forward and down from above the steering handle a8, the antenna unit U and the indicator monitor M do not obstruct the driver's forward view.

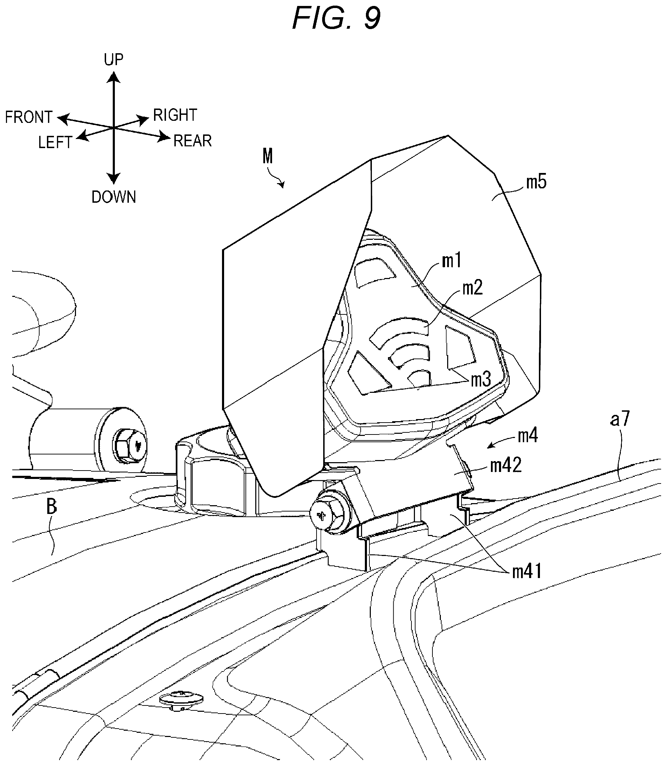

Fig. 9 is a perspective view of the main part around the indicator monitor M that is equipped with a sunshade m5 blocking sunlight.

As illustrated in Fig. 9, the sunshade m5 can be mounted on the indicator monitor M. By the sunshade m5 being mounted, the display unit m1 can be shaded and a decline in visibility attributable to sunlight can be prevented. By adjusting the angle of attachment by the support mechanism portion m4 at this time, a satisfactory visibility can be ensured in response to a change in light insertion angle.

To provide a work vehicle facilitating antenna unit handling with a simple structure while retaining a satisfactory reception accuracy. The above problem is solved by providing a work vehicle A with an engine bonnet B arranged in the front portion of a traveling vehicle body a1. The work vehicle includes: a weight bracket a15 at the front end; and an antenna unit attachment device X attaching an antenna unit U to the traveling vehicle body a1. The antenna unit attachment device X has a fixing portion x1 for fixing to the weight bracket a15, a pair of side rod portions x2 and x2 erected on the right and left sides of the fixing portion x1, and an erection portion x3 laid across the engine bonnet B. The side rod portions x2 and x2 are arranged so as to be separated from the engine bonnet B. The erection portion x3 is configured to support the antenna unit U at a position lower than a steering handle a8 and in the air above the front portion of the traveling vehicle body a1.

## Claims

1. A work vehicle (A) with an engine bonnet (B) arranged in a front portion of a traveling vehicle body (a1) and covering a motor unit (a5), the work vehicle comprising:
a weight bracket (a15) for weight attachment arranged at a front end of the traveling vehicle body (a1); and
an antenna unit attachment device (X) attaching an antenna unit (U) measuring a position and orientation of the traveling vehicle body (a1) to the traveling vehicle body, wherein
the antenna unit attachment device (X) includes
a fixing portion (x1) where the antenna unit attachment device (X) is fixed to the weight bracket (a15),
a pair of side rod portions (x2) respectively erected on right and left sides of the fixing portion (x1), and
an erection portion (x3) attached to an upper end of the side rod portion (x2) and laid across the engine bonnet (B),
the side rod portion (x2) is arranged so as to be separated from the engine bonnet (B), and
the erection portion (x3) is configured to support the antenna unit (U) at a position lower than a steering handle (a8) provided behind the engine bonnet (B) and in the air above the front portion of the traveling vehicle body (a1).

2. The work vehicle according to claim 1, wherein
the pair of side rod portions (x2) have a configuration allowing separation of one end side of the erection portion (x3) and are provided with
a pivot mechanism (x4) allowing the one end side of the erection portion (x3) to pivot around the other end side, and
a locking mechanism (x5) allowing the one end side of the erection portion (x3) to be locked and fixed.

3. The work vehicle according to claim 1 or 2, wherein an indicator monitor (M) provided with indicators (m2 and m3) allowing a driver to check a reception status of the antenna unit (U) is provided between the antenna unit (U) and the steering handle (a8) and an upper end of the indicator monitor (M) is arranged below an upper end of the steering handle (a8).
